(19)

Europäisches Patentamt

European Patent Office

Office européen des brevets

(11)  **EP 4 738 210 A1**

(12)  **EUROPEAN PATENT APPLICATION**

(43) Date of publication:
06.05.2026  Bulletin 2026/19

(21) Application number: 25207038.8

(22) Date of filing: 06.10.2025

(51) International Patent Classification (IPC):
*G06Q 10/04* (2023.01)      *G06Q 10/06* (2023.01)
*G06Q 10/08* (2024.01)      *G06Q 50/04* (2012.01)
*G05B 19/418* (2006.01)

(52) Cooperative Patent Classification (CPC):
G06Q 10/06; G05B 19/41865; G06Q 10/04;
G06Q 10/08; G06Q 50/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.10.2024  US 202418930250

(71) Applicant: Honeywell International Inc.
Charlotte, NC 28202 (US)

(72) Inventor: LU, Joseph
Charlotte, 28202 (US)

(74) Representative: Houghton, Mark Phillip
Patent Outsourcing Limited
1 King Street
Bakewell, Derbyshire DE45 1DZ (GB)

(54)  **SYSTEMS, APPARATUSES, METHODS, AND COMPUTER PROGRAM PRODUCTS FOR INITIATING PERFORMANCE OF ONE OR MORE PHYSICAL STORAGE UNIT OPTIMIZATION ACTIONS**

(57)  Systems, apparatuses, methods, and computer program products are provided herein. For example, a method may include generating a flow sheet model. In some embodiments, the method includes identifying a first physical storage unit of the plurality of physical storage units associated with the flow sheet model. In some embodiments, the method includes receiving a physical storage unit depletion term for the first physical storage unit and a plant optimization horizon. In some embodiments, the method includes generating physical storage unit depletion data by applying the physical storage unit depletion term and the plant optimization horizon to a physical storage unit depletion model. In some embodiments, the method includes initiating performance of one or more physical storage unit optimization actions based at least in part on the physical storage unit depletion data.

<u>100</u>

**FIG. 1**

**Description**

**TECHNOLOGICAL FIELD**

Embodiments of the present disclosure relate generally to systems, apparatuses, methods, and computer program products for initiating performance of one or more physical storage unit optimization actions.

**BACKGROUND**

Applicant has identified many technical challenges and difficulties associated with systems, apparatuses, methods, and computer program products for optimizing a plant. Through applied effort, ingenuity, and innovation, Applicant has solved problems related to systems, apparatuses, methods, and computer program products for optimizing a plant by developing solutions embodied in the present disclosure, which are described in detail below.

**BRIEF SUMMARY**

Various embodiments described herein relate to systems, apparatuses, methods, and computer program products for initiating performance of one or more physical storage unit optimization actions.

In accordance with one aspect of the disclosure a method is provided. In some embodiments, the method includes generating a flow sheet model. In some embodiments, the flow sheet model is representative of a plurality of physical processing units and a plurality of physical storage units of a plant. In some embodiments, each of the plurality of physical storage units is configured to store one or more processing materials. In some embodiments, the method includes identifying a first physical storage unit of the plurality of physical storage units associated with the flow sheet model. In some embodiments, the method includes receiving a physical storage unit depletion term for the first physical storage unit and a plant optimization horizon. In some embodiments, the method includes generating physical storage unit depletion data by applying the physical storage unit depletion term and the plant optimization horizon to a physical storage unit depletion model. In some embodiments, the method includes initiating performance of one or more physical storage unit optimization actions based at least in part on the physical storage unit depletion data.

In some embodiments, the flow sheet model is further representative of a plurality of physical streams of the plant.

In some embodiments, initiating performance of the one or more physical storage unit optimization actions includes configuring a plant optimization model using the physical storage unit depletion data.

In some embodiments, the plant optimization model is configured to perform a processing material balancing operation.

In some embodiments, the plurality of physical storage units includes an intermediate physical storage unit or a component physical storage unit.

In some embodiments, the physical storage unit depletion term and the plant optimization horizon are received from the plant.

In some embodiments, initiating performance of the one or more physical storage unit optimization actions includes causing actuation of at least one of the plurality of physical processing units or at least one of the plurality of physical storage units.

In some embodiments, initiating performance of the one or more physical storage unit optimization actions includes generating a physical storage unit depletion interface component.

In some embodiments, initiating performance of the one or more physical storage unit optimization actions includes causing the physical storage unit depletion interface component to be rendered to a physical storage unit depletion interface.

In some embodiments, the physical storage unit depletion interface component comprises a visual representation of the first physical storage unit.

In some embodiments, initiating performance of the one or more physical storage unit optimization actions includes transmitting at least one physical storage unit optimization action instruction to the plant.

In some embodiments, the flow sheet model is generated using operational data associated with the plant.

In accordance with another aspect of the disclosure, an apparatus is provided. In some embodiments, the apparatus includes memory and one or more processors communicatively coupled to the memory. In some embodiments, the one or more processors are configured to generate a flow sheet model. In some embodiments, the flow sheet model is representative of a plurality of physical processing units and a plurality of physical storage units of a plant. In some embodiments, each of the plurality of physical storage units is configured to store one or more processing materials. In some embodiments, the one or more processors are configured to identify a first physical storage unit of the plurality of physical storage units associated with the flow sheet model. In some embodiments, the one or more processors are configured to receive a physical storage unit depletion term for the first physical storage unit and a plant optimization horizon. In some embodiments, the one or more processors are configured to generate physical storage unit depletion data by applying the physical storage unit depletion term and the plant optimization horizon to a physical storage unit depletion model. In some embodiments, the one or more processors are configured to initiate performance of one or more physical storage unit optimization actions based at least in part on the physical storage unit depletion data.

In some embodiments, the flow sheet model is further representative of a plurality of physical streams of the plant.

In some embodiments, to initiate performance of the one or more physical storage unit optimization actions includes the one or more processors being further configured to configure a plant optimization model using the physical storage unit depletion data.

In some embodiments, the plurality of physical storage units includes an intermediate physical storage unit or a component physical storage unit.

In some embodiments, the physical storage unit depletion term and the plant optimization horizon are received from the plant.

In some embodiments, to initiate performance of the one or more physical storage unit optimization actions includes the one or more processors being further configured to cause actuation of at least one of the plurality of physical processing units or at least one of the plurality of physical storage units.

In some embodiments, to initiate performance of the one or more physical storage unit optimization actions includes the one or more processors being further configured to generate a physical storage unit depletion interface component.

In some embodiments, to initiate performance of the one or more physical storage unit optimization actions includes the one or more processors being further configured to cause the physical storage unit depletion interface component to be rendered to a physical storage unit depletion interface.

In some embodiments, to initiate performance of the one or more physical storage unit optimization actions includes the one or more processors being further configured to transmit at least one physical storage unit optimization action instruction to the plant.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for generating a flow sheet model. In some embodiments, the flow sheet model is representative of a plurality of physical processing units and a plurality of physical storage units of a plant. In some embodiments, each of the plurality of physical storage units is configured to store one or more processing materials. In some embodiments, the computer program code, in execution with at least one processor, configures the computer program product for identifying a first physical storage unit of the plurality of physical storage units associated with the flow sheet model. In some embodiments, the computer program code, in execution with at least one processor, configures the computer program product for receiving a physical storage unit depletion term for the first physical storage unit and a plant optimization horizon. In some embodiments, the computer program code, in execution with at least one processor, configures the computer program product for generating physical storage unit depletion data by applying the physical storage unit depletion term and the plant optimization horizon to a physical storage unit depletion model. In some embodiments, the computer program code, in execution with at least one processor, configures the computer program product for initiating performance of one or more physical storage unit optimization actions based at least in part on the physical storage unit depletion data.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

## BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.

FIG. 1 illustrates an exemplary block diagram of an environment in which embodiments of the present disclosure may operate;

FIG. 2 illustrates an exemplary block diagram of an example apparatus that may be specially configured in accordance with an example embodiment of the present disclosure;

FIG. 3 illustrates a flow sheet model in accordance with one or more embodiments of the present disclosure;

FIG. 4 illustrates an interface in accordance with one or more embodiments of the present disclosure;

FIG. 5 illustrates a flowchart of an example method in accordance with one or more embodiments of the present disclosure; and

FIG. 6 illustrates a flowchart of an example method in accordance with one or more embodiments of the present disclosure.

## DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

<u>Overview</u>

Example embodiments disclosed herein address technical problems associated with systems, apparatuses, methods, and computer program products for optimizing a plant. As would be understood by one skilled in the field to which this disclosure pertains, there are numerous example scenarios in which systems, apparatuses, methods, and computer program products for optimizing a plant are desirable.

In many applications it may be desirable to use systems, apparatuses, methods, and computer program products for optimizing a plant. For example, it may be desirable to use systems, apparatuses, methods, and computer program products for optimizing a plant to improve the efficiency of the plant. As another example, it may be desirable to use systems, apparatuses, methods, and computer program products for optimizing a plant to control the emissions of the plant. As another example, it may be desirable to use systems, apparatuses, methods, and computer program products for optimizing a plant to control how much processed product the plant produces. As another example, it may be desirable to use systems, apparatuses, methods, and computer program products for optimizing a plant to control when a plant makes particular processed products instead of other processed products. As another example, it may be desirable to use systems, apparatuses, methods, and computer program products for optimizing a plant to manage maintenance actions associated with the plant.

Example solutions for optimizing a plant include using a computing device to control the operations of the plant in an optimized manner. However, such example solutions are inefficient, reactive, simplistic, and technically deficient. For example, such example solutions are inefficient because such example solutions do not use a specifically configured physical storage unit depletion model to optimize operations of a plant. As a result, such example solutions cause computing devices to suffer from high latency, consume excessive processing power, and consume excessive memory. As another example, such example solutions are reactive because such example solutions are unable to automatically implement physical storage unit optimization actions that include causing actuation of a physical storage unit and/or configuring a plant optimization model. As another example, such example solutions are simplistic because such example solutions are unable to generate flow sheet models representative of a plant. As another example, such example solutions are technically deficient because such example solutions are unable to use generated flow sheet models to independently control physical storage units, such as intermediate physical storage units and/or component physical storage units, using physical storage unit depletion data. Accordingly, there is a need there is a need for systems, apparatuses, methods, and computer program products that are able optimize a plant in an efficient, a proactive, a sophisticated, and a technically sufficient manner.

Thus, to address these and/or other issues related to such example solutions, example systems, apparatuses, methods, and computer program products for initiating performance of one or more physical storage unit optimization actions are disclosed herein. For example, an embodiment in this disclosure, described in greater detail below, includes a method that includes generating a flow sheet model. In some embodiments, the flow sheet model is representative of a plurality of physical processing units and a plurality of physical storage units of a plant. In some embodiments, each of the plurality of physical storage units is configured to store one or more processing materials. In some embodiments, the method includes identifying a first physical storage unit of the plurality of physical storage units associated with the flow sheet model. In some embodiments, the method includes receiving a physical storage unit depletion term for the first physical storage unit and a plant optimization horizon. In some embodiments, the method includes generating physical storage unit depletion data by applying the physical storage unit depletion term and the plant optimization horizon to a physical storage unit depletion model. In some embodiments, the method includes initiating performance of one or more physical storage unit optimization actions based at least in part on the physical storage unit depletion data. Accordingly, the systems, apparatuses, methods, and computer program products provided herein are able to initiate performance of one or more physical storage unit optimization actions in an efficient, a proactive, a sophisticated, and a technically sufficient manner.

Example Systems and Apparatuses

Embodiments of the present disclosure herein include systems, apparatuses, methods, and computer program products configured for initiating performance of one or more physical storage unit optimization actions. It should be readily appreciated that the embodiments of the apparatus, systems, methods, and computer program product described herein may be configured in various additional and alternative manners in addition to those expressly described herein.

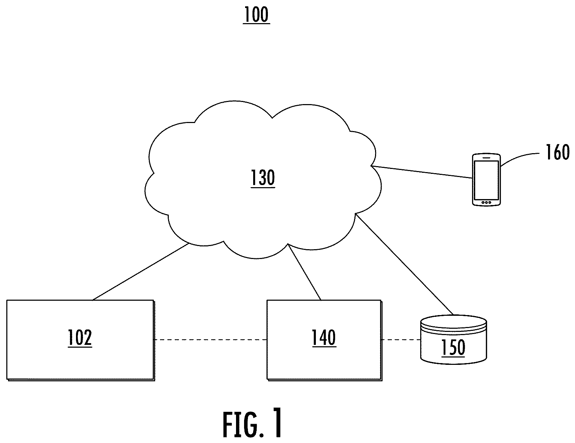

FIG. 1 illustrates an exemplary block diagram of an environment 100 in which embodiments of the present disclosure may operate. Specifically, FIG. 1 illustrates a plant 102. In some embodiments, for example, the plant 102 may be any type of plant associated with a user associated with the environment 100. In this regard, the plant 102 may, for example, be a processing plant that receives and processes input ingredients to create a processed product, such as a hydrocarbon processing plant, a refinery, a pulp and paper plant, a chemical plant, an alumina plant, a drilling facility, a fracking field, and/or the like.

The plant 102 in some embodiments includes any number of individual physical processing units. The physical processing units of the plant 102 may perform a particular function during operation of the plant 102. For example, the physical processing units may include one or more well physical processing units, fracking physical processing units, crude processing physical processing units (e.g., crude processing physical processing units having a vacuum section), hydrotreating physical processing units, isomerization physical processing units, reforming physical processing units, vapor recovery physical processing units, fluid catalytic cracking physical processing units, batch blending physical processing units, rundown blending physical processing units, hydrocracking physical processing units, alkylation physical processing units, dewaxing physical processing units, deasphalter physical processing units (e.g., propane deasphalter physical processing units), aromatics reduction physical processing units, delayed cooker physical processing units, visbreaker physical processing units, digester physical processing units, thermomechanical grinding physical processing units, bleaching physical processing units, blender physical processing units, pump physical processing units, flash venting physical processing units, compressor physical processing units, cooler physical processing units (e.g., air cooler physical processing units), sensor physical processing units, , flare physical processing units, heating, ventilation, and air (HVAC) physical processing units, lighting physical processing units, and/or the like that perform a particular operation for transforming, separating, reacting, reforming, digesting, bleaching, storing, releasing, and/or otherwise handling one or more input ingredients, intermediate ingredients, and/or processed products (e.g., hydrocarbons, gases, etc.). In this regard, for example, the individual physical processing units of the plant 102 may include physical processing units associated with a particular process performed by the plant 102.

The plant 102 in some embodiments includes any number of individual physical streams. The physical streams of the plant 102 may perform a particular function during operation of the plant 102. For example, the physical streams may include one or more liquefied petroleum gas physical streams, straight-run gasoline physical streams, naphtha physical streams, middle distillates physical streams, crude physical streams, heavy atmospheric gasoil physical streams, vacuum gasoil physical streams, lube base stocks physical streams, fuel gas physical streams, light gasoil physical streams, gasoline physical streams, fractionator bottoms physical streams, fuel oil physical streams, asphalt physical streams, refinery fuel physical streams, regular gasoline physical streams, solvents physical streams, aviation fuel physical streams, diesel physical streams, heating oil physical streams, lube oil physical streams, grease physical streams, industrial fuel physical streams, wood chip physical streams, brown stock physical streams, white liquor physical streams, bleached pulp physical streams, and/or the like that perform a particular operation for transforming, storing, releasing, transporting, and/or otherwise handling one or more input ingredients, intermediate ingredients, and/or processed products (e.g., hydrocarbons, gases, etc.). In this regard, for example, the individual physical streams of the plant 102 may include physical streams associated with a particular process performed by the plant 102.

The plant 102 in some embodiments includes any number of individual physical storage units. The physical storage units may perform a particular function during operation of the plant 102. For example, the physical storage units may include one or more input physical storage units, intermediate physical storage units, component physical storage units, processed product physical storage units, and/or the like that perform a particular operation for transforming, storing, releasing, transporting, and/or otherwise handling one or more input ingredients, intermediate ingredients, and/or processed products (e.g., hydrocarbons, gases, etc.). In this regard, for example, the individual physical streams of the plant 102 may include physical storage units associated with a particular process performed by the plant 102.

In some embodiments, each individual physical processing unit, each individual physical storage unit, and/or each individual physical stream of the plant 102 is associated with a determinable location. The determinable location of a particular physical processing unit, physical storage unit, and/or physical stream in some embodiments represents an absolute position (e.g., GPS coordinates, latitude, and longitude locations, and/or the like) or a relative position (e.g., a point representation of the location of a physical processing unit, physical storage unit, and/or physical stream from a local origin point corresponding to the plant 102). In some embodiments, a physical processing unit, physical storage unit, and/or physical stream includes or otherwise is associated with a location sensor and/or software-driven location services that provide the location data representing the location corresponding to that physical processing unit, physical storage unit, and/or physical stream. In other embodiments the location of a physical processing unit, physical storage unit, and/or physical stream is stored and/or otherwise predetermined within a software environment, provided by a user and/or otherwise determinable to one or more systems.

Additionally, or alternatively, in some embodiments, the plant 102 itself is associated with a determinable location. The determinable location of the plant 102 in some embodiments represents an absolute position (e.g., GPS coordinates, latitude and longitude locations, an address, and/or the like) or a relative position of the plant 102 (e.g., an identifier representing the location of the plant 102 as compared to one or more other plants, one or more other buildings, an enterprise headquarters, or general description in the world for example based at least in part on continent, state, or other definable region). In some embodiments, the plant 102 includes or otherwise is associated with a location sensor and/or software-driven location services that provide the location data corresponding to the plant 102. In other embodiments, the location of the plant 102 is stored and/or otherwise determinable to one or more systems.

The network 130 may be embodied in any of a myriad of network configurations. In some embodiments, the network 130 may be a public network (e.g., the Internet). In some embodiments, the network 130 may be a private network (e.g., an internal localized, or closed-off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

In some embodiments, the environment 100 may include a physical storage unit optimization system 140. In some embodiments, for example, the physical storage unit optimization system 140 may be configured to optimize one or more plants (e.g., plant 102). The physical storage unit optimization system 140 may be electronically and/or communicatively coupled to the plant 102, individual physical processing units of the plant 102, one or more databases 150, and/or one or more user devices 160. The physical storage unit optimization system 140 may be located remotely, in proximity of, and/or within the plant 102. In some embodiments, the physical storage unit optimization system 140 is configured via hardware, software, firmware, and/or a combination thereof, to perform data intake of one or more types of data associated with one or more of the plant 102. Additionally, or alternatively, in some embodiments, the physical storage unit optimization system 140 is configured via hardware, software, firmware, and/or a combination thereof, to generate and/or transmit command(s) that control, adjust, or otherwise impact operations of one or more of the plant 102 or specific physical processing unit(s) thereof, for example for controlling one or more operations of the plant 102. Additionally, or alternatively still, in some embodiments, the physical storage unit optimization system 140 is configured via hardware, software, firmware, and/or a combination thereof, to perform data reporting and/or other data output process(es) associated with monitoring or otherwise analyzing operations of one or more of the plant 102 or specific physical processing unit(s) thereof, for example for generating and/or outputting report(s) corresponding to the operations performed via the plant 102. For example, in various embodiments, the physical storage unit optimization system 140 may be configured to execute and/or perform one or more operations and/or functions described herein.

The one or more databases 150 may be configured to receive, store, and/or transmit data. In some embodiments, the one or more databases 150 may be associated with data associated with the plant 102. In some embodiments, the data may be received from the plant 102. In this regard, for example, the plant 102 may have one or more sensors that capture data and/or one or more datastores that store data. In some embodiments, the data may be received from the physical storage unit optimization system 140. In this regard, for example, the physical storage unit optimization system 140 may be configured to identify data associated with the plant 102. In some embodiments, the one or more databases 150 may be associated with data received from the plant 102 and/or the physical storage unit optimization system 140 in real-time. Additionally, or alternatively, the one or more databases 150 may be associated with data received from the plant 102 and/or the physical storage unit optimization system 140 on a periodic basis (e.g., the data may be received from the plant 102 and/or the physical storage unit optimization system 140 once per day). Additionally, or alternatively, the one or more databases 150 may be associated with historical physical representation received from the plant 102 and/or the physical storage unit optimization system 140 (e.g., physical representation previously received from the plant 102 and/or the physical storage unit optimization system 140). Additionally, or alternatively, the one or more databases 150 may be associated with data received from the plant 102 and/or the physical storage unit optimization system 140 in response to a request for the data. Additionally, or alternatively, the one or more databases 150 may be associated with data inputted (e.g., by a user) into the physical storage unit optimization system 140 and/or the one or more user devices 160.

The one or more user devices 160 may be associated with users of the physical storage unit optimization system 140. In various embodiments, the physical storage unit optimization system 140 may generate and/or transmit a message, alert, or indication to a user via a user device 160. Additionally, or alternatively, a user device 160 may be utilized by a user to remotely access the physical storage unit optimization system 140. This may be by, for example, an application operating on the user device 160. A user may access the physical storage unit optimization system 140 remotely, including one or more visualizations, reports, and/or real-time displays.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the physical storage unit optimization system 140 may include the one or more databases 150, which may collectively be located in or at the plant 102.

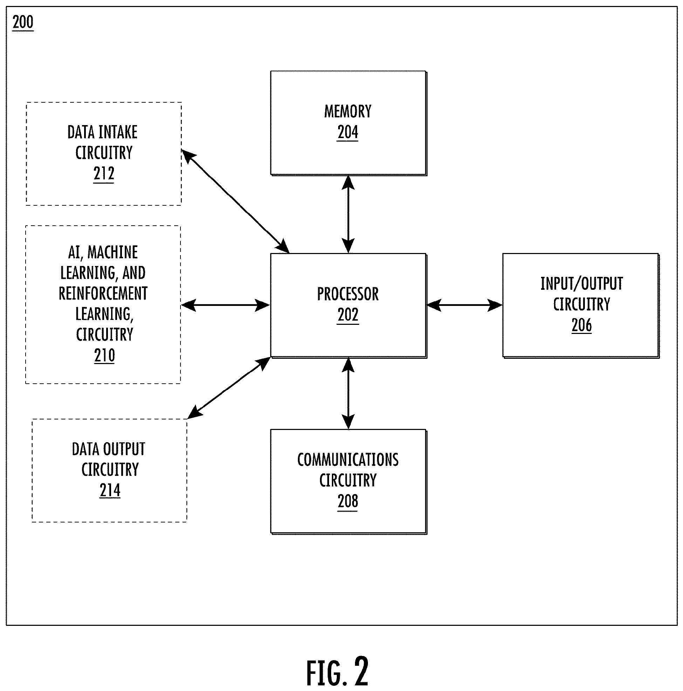

FIG. 2 illustrates an exemplary block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, a physical storage unit optimization system 140, the one or more databases 150, and/or a user device 160. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of a physical storage unit optimization system 140 or of a user device 160 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuitry 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the plant 102. In some embodiments, the data intake circuitry 212 includes hardware, software, firmware, and/or a combination thereof, that communicates with one or more sensor(s) unit(s), and/or the like within the plant 102 to receive particular data associated with such operations of the plant 102. Additionally, or alternatively, in some embodiments, the data intake circuitry 212 includes hardware, software, firmware, and/or a combination thereof, that retrieves particular data associated with the plant 102 from one or more data repository/repositories accessible to the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

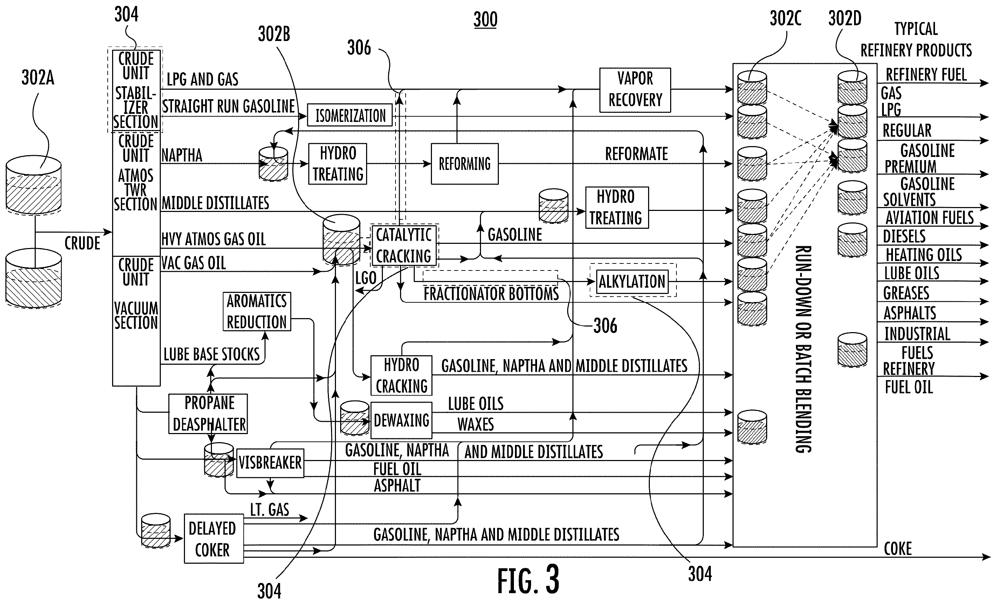

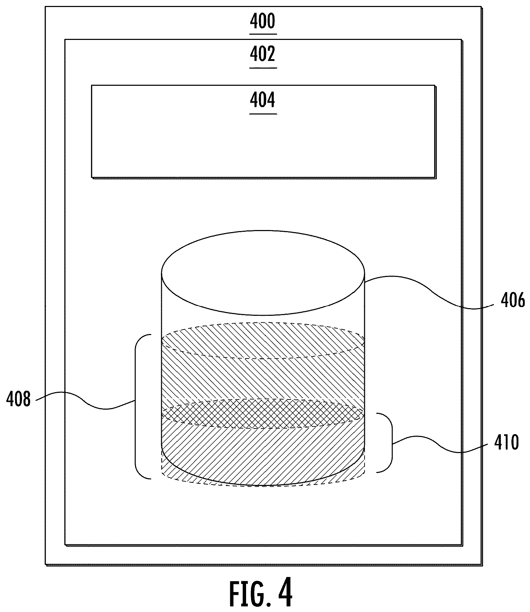

With reference to FIGS. 1-4, in some embodiments, the physical storage unit optimization system 140 is configured to generate a flow sheet model 300. In some embodiments, the physical storage unit optimization system 140 is configured generate the flow sheet model 300 using operational data. In some embodiments, operational data includes one or more items of data representative and/or indicative of operations of the plant 102. For example, operational data may be representative of any number of physical processing units, physical storage units, and/or physical streams included in the plant 102 (e.g., which physical processing units, physical storage units, and/or physical streams are included in the plant 102). As another example, operational data may be representative of one or more statuses associated with the plant 102 (e.g., what type of processed product the plant 102 is generating). In this regard, in some embodiments, the physical storage unit optimization system 140 is configured to receive operational data from the plant 102 and use the operational data to generate the flow sheet model 300. Additionally, or alternatively, the physical storage unit optimization system 140 is configured to receive the flow sheet model 300. For example, the physical storage unit optimization system 140 may be configured to receive the flow sheet model 300 from the plant 102 and/or one or more external computing devices (e.g., the plant 102 and/or one or more external computing devices are configured to generate the flow sheet model 300).

In some embodiments, the flow sheet model 300 is representative of a layout of the plant 102. In this regard, in some embodiments, the flow sheet model 300 is representative of a plurality of physical storage units 302 of the plant 102. In some embodiments, each of the plurality of physical storage units 302 is configured to store one or more processing materials. In some embodiments, the one or more processing materials include one or more input ingredients. For example, the one or more input ingredients may include raw materials and/or ingredients upon which the plant 102 has not performed any processing (e.g., crude oil). In some embodiments, the one or more processing materials include one or more intermediate ingredients. For example, the one or more intermediate ingredients may include partially processed materials and/or partially processed ingredients upon which the plant 102 has performed some processing but has not completed processing. In some embodiments, the one or more processing materials include one or more processed products. For example, the one or more processed products may include processed materials and/or processed products upon which the plant 102 has completed processing (e.g., aviation fuel).

In some embodiments, the plurality of physical storage units 302 includes any number of the types of physical storage units described above. For example, the plurality of physical storage units 302 may include one or more input physical storage units 302A. In some embodiments, the one or more input physical storage units 302A are configured to store processing materials that include one or more input ingredients. As another example, the plurality of physical storage units 302 may include one or more intermediate physical storage units 302B. In some embodiments, the one or more intermediate physical storage units 302B are configured to store processing materials that include one or more intermediate ingredients. As another example, the plurality of physical storage units 302 may include one or more component physical storage units 302C. In some embodiments, the one or more component physical storage units 302C are configured to store processing materials that include one or more intermediate ingredients. As another example, the plurality of physical storage units 302 may include one or more processed product physical storage units 302D. In some embodiments, the one or more processed product physical storage units 302D are configured to store processing materials that include one or more processed products.

In some embodiments, the flow sheet model 300 is representative of a plurality of physical processing units 304 of the plant 102. In some embodiments, the plurality of physical processing units 304 include any number of the types of physical processing units described above. For example, the plurality of physical storage units 302 may include a catalytic cracking processing unit. In some embodiments, the flow sheet model 300 is representative of a plurality of physical streams 306 of the plant 102. In some embodiments, the plurality of physical streams 306 include any number of the types of physical streams described above. For example, the plurality of physical streams 306 may include a naphtha physical stream. Additionally, or alternatively, the flow sheet model 300 is representative of one or more relationships and/or connections between the plurality of physical storage units 302, the plurality of physical processing units 304, and/or the plurality of physical streams 306. For example, the flow sheet model 300 may indicate that one or more of the plurality of physical storage units 302 are connected to one or more of the plurality of physical processing units 304 via one or more of the plurality of physical streams 306.

In some embodiments, the physical storage unit optimization system 140 is configured to identify a first physical storage unit of the plurality of physical storage units 302. For example, the physical storage unit optimization system 140 may be configured to identify a first physical storage unit from the one or more intermediate physical storage units 302B. As another example, the physical storage unit optimization system 140 is configured to identify a first physical storage unit from the one or more component physical storage units 302C. In some embodiments, the physical storage unit optimization system 140 is configured to generate physical storage unit depletion data associated with a first physical storage unit of the plurality of physical storage units 302. Said differently, for example, a first physical storage unit may be identified such that physical storage unit depletion data can be generated for the first physical storage unit.

In some embodiments, identifying a first physical storage unit of the plurality of physical storage units 302 includes the physical storage unit optimization system 140 being configured to receive an indication of the first physical storage unit. For example, the physical storage unit optimization system 140 may be configured to receive an indication of the first physical storage unit from an operator of the plant 102 and/or a user of the physical storage unit optimization system 140.

In some embodiments, identifying a first physical storage unit of the plurality of physical storage units 302 includes the physical storage unit optimization system 140 being configured to receive an indication of a particular processed product that an operator of the plant 102 and/or a user of the physical storage unit optimization system 140 is planning to make over a particular time period. In this regard, in some embodiments, the physical storage unit optimization system 140 is configured to identify a first physical storage unit for which physical storage unit depletion data should be generated in order to ensure that an operator of the plant 102 and/or a user of the physical storage unit optimization system 140 is able to make the particular processed product over the particular time period. For example, the first physical storage unit may be configured to store an intermediate ingredient that is used to generate the particular processed product.

In some embodiments, identifying a first physical storage unit of the plurality of physical storage units 302 includes the physical storage unit optimization system 140 being configured to receive an indication of a particular intermediate ingredient that an operator of the plant 102 and/or a user of the physical storage unit optimization system 140 wants to preserve. In this regard, in some embodiments, the physical storage unit optimization system 140 is configured to identify a first physical storage unit for which physical storage unit depletion data should be generated in order to ensure that the particular intermediate ingredient that an operator of the plant 102 and/or a user of the physical storage unit optimization system 140 wants to preserve is preserved. For example, the first physical storage unit may be configured to store the particular intermediate ingredient that is to be preserved.

In some embodiments, the physical storage unit optimization system 140 is configured to receive a physical storage unit depletion term. In some embodiments, the physical storage unit optimization system 140 is configured to receive a physical storage unit depletion term from an operator of the plant 102 (e.g., a computing device associated with an operator the plant 102). In some embodiments, the physical storage unit optimization system 140 is configured to receive a physical storage unit depletion term from a user of the physical storage unit optimization system 140. In this regard, in some embodiments, an operator of the plant 102 and/or a user of the physical storage unit optimization system 140 may be able to define a physical storage unit depletion term for the plant 102 and/or one or more other plants associated with the operator or user (e.g., an operator may be able to define different physical storage unit depletion terms for different plants based on the operations of each of the plants). For example, an operator of the plant 102 and/or a user of the physical storage optimization system 140 may be able to define a physical storage unit depletion term that is equal to an optimization horizon and/or a percentage of an optimization horizon.

In some embodiments, the physical storage unit optimization system 140 is configured to request a physical storage unit depletion term from an operator of the plant 102 and/or a user of the physical storage unit optimization system 140. For example, the physical storage unit optimization system 140 may be configured to request a physical storage unit depletion term from an operator of the plant 102 and/or a user of the physical storage unit optimization system 140 in response to identifying a first physical storage unit of the plurality of physical storage units 302.

In some embodiments, the physical storage unit optimization system 140 is configured to generate a physical storage unit depletion term. In some embodiments, the physical storage unit optimization system 140 is configured to generate a physical storage unit depletion term using operational data. In this regard, for example, the physical storage unit optimization system 140 may be configured to generate a physical storage unit depletion term using operational data representative of a type of processed product the plant 102 is currently generating and/or planning to generate in the near term. As another example, the physical storage unit optimization system 140 may be configured to generate a physical storage unit depletion term using operational data representative of the types of physical processing units, physical storage units, and/or physical streams in the plant 102. In some embodiments, the physical storage unit optimization system 140 is configured to generate a physical storage unit depletion term when the physical storage unit optimization system 140 does not receive a physical storage unit depletion term from an operator of the plant 102 and/or a user of the physical storage unit optimization system 140. For example, the physical storage unit optimization system 140 may be configured to generate a physical storage unit depletion term that is equal to an optimization horizon and/or a percentage of an optimization horizon.

In some embodiments, a physical storage unit depletion term is a data object that is representative and/or indicative of a time period, time window, and/or the like for which processing materials stored in one of the plurality of physical storage units 302 should last. In this regard, for example, a physical storage unit depletion term may be a data object that is representative and/or indicative of a time period, time window, and/or the like for which intermediate ingredients stored in one of the one or more intermediate physical storage units 302B should last (e.g., 3 months). As another example, a physical storage unit depletion term may be a data object that is representative and/or indicative of a time period, time window, and/or the like for which intermediate ingredients stored in one of the one or more component physical storage units 302C should last (e.g., 2 months).

In some embodiments, the physical storage unit optimization system 140 is configured to receive a plant optimization horizon. In some embodiments, the physical storage unit optimization system 140 is configured to receive a plant optimization horizon from an operator of the plant 102 (e.g., a computing device associated with an operator the plant 102). In some embodiments, the physical storage unit optimization system 140 is configured to receive a plant optimization horizon from a user of the physical storage unit optimization system 140. In some embodiments, the physical storage unit optimization system 140 is configured to request a plant optimization horizon from an operator of the plant 102 and/or a user of the physical storage unit optimization system 140. For example, the physical storage unit optimization system 140 may be configured to request a plant optimization horizon from an operator of the plant 102 and/or a user of the physical storage unit optimization system 140 in response to identifying a first physical storage unit of the plurality of physical storage units 302 and/or receiving a physical storage unit depletion term.

In some embodiments, the physical storage unit optimization system 140 is configured to generate a plant optimization horizon. In some embodiments, the physical storage unit optimization system 140 is configured to generate a plant optimization horizon using operational data. In this regard, for example, the physical storage unit optimization system 140 may be configured to generate a plant optimization horizon using operational data representative of a type of processed product the plant 102 is currently generating and/or planning to generate in the near term. As another example, the physical storage unit optimization system 140 may be configured to generate a plant optimization horizon using operational data representative of the types of physical processing units, physical storage units, and/or physical streams in the plant 102.

In some embodiments, a plant optimization horizon is a data object that is representative and/or indicative of a frequency at which the physical storage unit optimization system 140 implements one or more optimization operations for the plant 102. For example, a plant optimization horizon may be a data object that is representative and/or indicative of a twelve-to-sixteen-hour frequency at which the physical storage unit optimization system 140 implements one or more optimization operations. In some embodiments, an optimization operation is an operation performed by the physical storage unit optimization system 140 to optimize the operations of the plant 102 based on data associated with the plant 102 (e.g., operational data). For example, an optimization operation may include the physical storage unit optimization system 140 being configured to address deviations in the amount of processed products generated by the plant 102 due do disturbances and/or maintenance associated with one or more of the plurality of physical storage units 302, the plurality of physical processing units 304, and/or the plurality of physical streams 306 of the plant 102. Said differently, for example, an optimization horizon may be a data object that is representative and/or indicative of a frequency at which the physical storage unit optimization system 140 optimizes operations of the plant 102 based on the current and/or near-term conditions of the plant 102. In some embodiments, an optimization horizon may be associated with a frequency that is less than the physical storage unit depletion term. For example, there may be multiple optimization horizons in a single physical storage unit depletion term. In some embodiments, an optimization horizon is determined and/or set to prevent rocking of one or more of the plurality of physical storage units 302, the plurality of physical processing units 304, and/or the plurality of physical streams 306 of the plant 102. To supplement the present disclosure, this application incorporates entirely by reference U.S. Patent No. 9,733,629 and U.S. Patent Application Publication No. 2021/0132591 which describe a plant optimization horizon (e.g. determining and/or generating a plant optimization horizon), cascaded model predictive control (MPC) for control and optimization of the plant 102, and optimization of batch blending at the plant 102.

In some embodiments, the physical storage unit optimization system 140 is configured to generate physical storage unit depletion data. In some embodiments, physical storage unit depletion data includes one or more items of data representative and/or indicative of a portion of the processing material stored in a physical storage unit (e.g., a first physical storage unit) of the plurality of physical storage units 302 to hold in reserve. For example, physical storage unit depletion data may include one or more items of data representative and/or indicative of a portion of the input ingredients stored in an input physical storage unit of the one or more input physical storage units 302A to hold in reserve. As another example, physical storage unit depletion data may include one or more items of data representative and/or indicative of a portion of the intermediate ingredients stored in an intermediate physical storage unit of the one or more intermediate physical storage units 302B to hold in reserve. As another example, physical storage unit depletion data may include one or more items of data representative and/or indicative of a portion of the intermediate ingredients stored in a component physical storage unit of the one or more component physical storage units 302C to hold in reserve. As another example, physical storage unit depletion data may include one or more items of data representative and/or indicative of a portion of the processed products stored in a processed product physical storage unit of the one or more processed product physical storage units 302D to hold in reserve. Said differently, for example, physical storage unit depletion data may be representative of a reserve portion of the total processing material stored in a particular physical storage unit (e.g., a first physical storage unit) of the plurality of physical storage units 302.

In some embodiments, the physical storage unit optimization system 140 is configured to generate physical storage unit depletion data by applying a physical storage unit depletion term and/or a plant optimization horizon to a physical storage unit depletion model. In some embodiments, the physical storage unit depletion model is a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to generate physical storage unit depletion data. In this regard, in some embodiments, the physical storage unit depletion model may be configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, clustering techniques, and/or the like. For example, the physical storage unit depletion model may be configured to generate physical storage unit depletion data using any of the above techniques and/or equation (1):

$$(1) \quad P = e^{-\frac{(2 * optimization\ horizon)}{\left(\frac{PT}{3}\right)}}$$

where P corresponds to physical storage unit depletion data that, for example, represents a physical storage unit depletion factor (e.g., a portion of the processing material stored in a physical storage unit) and PT corresponds to a physical storage unit depletion term that, for example, represents a depletion window (e.g., a time period, time window, and/or the like for which processing materials stored in one of the plurality of physical storage units 302 should last).

In some embodiments, the physical storage unit optimization system 140 is configured to update previously generated physical storage unit depletion data. For example, the physical storage unit optimization system 140 may be configured to update previously generated physical storage unit depletion data in response to receiving an updated physical storage unit depletion term. As another example, the physical storage unit optimization system 140 may be configured to update previously generated physical storage unit depletion data in response to receiving an updated optimization horizon. As another example, the physical storage unit optimization system 140 may be configured to update previously generated physical storage unit depletion data in response to a physical storage unit depletion term ending or expiring. As another example, the physical storage unit optimization system 140 may be configured to update previously generated physical storage unit depletion data in response to an optimization horizon ending or expiring.

In some embodiments, the physical storage unit optimization system 140 is configured to initiate performance of one or more physical storage unit optimization actions. In some embodiments, the physical storage unit optimization system 140 is configured to initiate performance of one or more physical storage unit optimization actions based at least in part on physical storage unit depletion data. In this regard, in some embodiments, the physical storage unit optimization system 140 is configured to generate a physical storage unit depletion interface component 402.

In some embodiments, the physical storage unit depletion interface component 402 includes a physical storage unit depletion interface element 404. In some embodiments, the physical storage unit depletion interface element 404 is configured to display physical storage unit depletion data. In this regard, for example, the physical storage unit depletion interface element 404 may be configured to display information indicative of a portion of the processing material stored in a physical storage unit (e.g., a first physical storage unit) of the plurality of physical storage units 302 to hold in reserve, an optimization horizon used to generate the physical storage unit depletion data, and/or a physical storage unit depletion term used to generated the physical storage unit depletion data.

In some embodiments, the physical storage unit depletion interface component 402 includes a visual representation 406 of a first physical storage unit (e.g., a physical storage unit for which the physical storage unit optimization system 140 has generated physical storage unit depletion data). In some embodiments, the visual representation 406 is configured to display a total amount 408 of processing material stored in the first physical storage unit. In some embodiments, the visual representation 406 is configured to show a portion 410 of the total amount 408 stored in the first physical storage unit (e.g., a portion that is indicated by physical storage unit depletion data).

In some embodiments, the physical storage unit optimization system 140 is configured to dynamically update the visual representation 406. For example, the physical storage unit optimization system 140 may be configured to dynamically update the visual representation 406 in response to updating previously generated physical storage unit depletion data. In some embodiments, the visual representation 406 may be located in proximity to the physical storage unit depletion interface element 404 on the physical storage unit depletion interface component 402. Additionally, or alternatively, the physical storage unit depletion interface element 404 may be at least partially overlaid the visual representation 406 the physical storage unit depletion interface component 402.

In some embodiments, the physical storage unit optimization system 140 is configured to cause the physical storage unit depletion interface component 402 to be rendered to a physical storage unit depletion interface 400. In this regard, for example, the physical storage unit depletion interface component 402 may be accessed using the physical storage unit optimization system 140, a computing device associated with the plant 102, the user device 160, and/or one or more other computing devices (e.g., a remote computing device).

In some embodiments, initiating performance of one or more physical storage unit optimization actions includes the physical storage unit optimization system 140 being configured to configure a plant optimization model. In some embodiments, the plant optimization model is configured to perform one or processing material balancing operations (e.g., a mass balancing operation) associated with the plant 102. In this regard, in some embodiments, the plant optimization model is a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to perform one or more processing material balancing operations. In this regard, in some embodiments, the plant optimization model may be configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, clustering techniques, and/or the like. For example, the plant optimization model may be configured to perform one or more processing material balancing operations using equation (2):

$$(2) \quad R \cdot p_{m1}^{after} \leq c_{m1} := \int_0^{OH} G_F u \, dt + V_0 + V_s^{after}$$

where $V_0$ is representative of a total amount of processing material in a physical storage unit, such as a first physical storage unit (e.g., corresponding to the total amount 408 illustrated in the visual representation 406).

In some embodiments, the physical storage unit optimization system 140 is configured to configure the plant optimization model to account for physical storage unit depletion data generated by the physical storage unit optimization system 140. In this regard, in some embodiments, the physical storage unit optimization system 140 may be configured to configure the plant optimization model by altering equation (2) to become equation (3):

$$(3) \quad R \cdot p_{m1}^{after} \leq c_{m1} := \int_0^{OH} G_F u \, dt + (1 - P)V_0 + V_s^{after}$$

where P is representative of physical storage unit depletion data (e.g., physical storage unit depletion factor, as described above).

As another example, the plant optimization model may be configured to perform one or more processing material balancing operations using equation (4):

$$(4) \quad R \cdot |p_{m1} - Sum(V_s)^T| \leq c_{m2} := \int_0^{OH} G_F u dt + V_0$$

where $V_0$ is representative of a total amount of processing material in a physical storage unit, such as a first physical storage unit (e.g., corresponding to the total amount 408 illustrated in the visual representation 406).

In some embodiments, the physical storage unit optimization system 140 is configured to configure the plant optimization model to account for physical storage unit depletion data generated by the physical storage unit optimization system 140. In this regard, in some embodiments, the physical storage unit optimization system 140 may be configured to configure the plant optimization model by altering equation (4) to become equation (5):

$$(5) \quad R \cdot |p_{m1} - Sum(V_s)^T| \leq c_{m2} := \int_0^{OH} G_F u dt + (1 - P)V_0$$

where P is representative of physical storage unit depletion data (e.g., physical storage unit depletion factor).

As another example, the plant optimization model may be configured to perform one or more processing material balancing operations using equation (6):

$$(6) \quad p_{m2} \leq c_{m2} := \int_0^{OH} G_F u dt + V_0$$

where $V_0$ is representative of a total amount of processing material in a physical storage unit, such as a first physical storage unit (e.g., corresponding to the total amount 408 illustrated in the visual representation 406).

In some embodiments, the physical storage unit optimization system 140 is configured to configure the plant optimization model to account for physical storage unit depletion data generated by the physical storage unit optimization system 140. In this regard, in some embodiments, the physical storage unit optimization system 140 may be configured to configure the plant optimization model by altering equation (6) to become equation (7):

$$(7) \quad p_{m2} \leq c_{m2} := \int_0^{OH} G_F u dt + (1 - P)V_0$$

where P is representative of physical storage unit depletion data (e.g., physical storage unit depletion factor).

In some embodiments, initiating performance of one or more physical storage unit optimization actions includes the physical storage unit optimization system 140 being configured to cause actuation of at least one of the plurality of physical storage units 302. For example, the physical storage unit optimization system 140 may be configured to cause actuation of at least one of the plurality of physical storage units 302 to ensure that a portion of the processing material stored in a physical storage unit (e.g., a first physical storage unit) is held in reserve in accordance with physical storage unit depletion data generated by the physical storage unit optimization system 140. As another example, the physical storage unit optimization system 140 may be configured to cause actuation of at least one of the plurality of physical processing units 304 to ensure that a portion of the processing material stored in a physical storage unit (e.g., a first physical storage unit) is held in reserve in accordance with physical storage unit depletion data generated by the physical storage unit optimization system 140. As another example, the physical storage unit optimization system 140 may be configured to cause actuation of at least one of the plurality of physical streams 306 to ensure that a portion of the processing material stored in a physical storage unit (e.g., a first physical storage unit) is held in reserve in accordance with physical storage unit depletion data generated by the physical storage unit optimization system 140.

In some embodiments, initiating performance of one or more physical storage unit optimization actions includes the physical storage unit optimization system 140 being configured to transmit at least one physical storage unit optimization action instruction to the plant 102. For example, the physical storage unit optimization system 140 may be configured to transmit a physical storage unit optimization action instruction to a computing device located at the plant 102. In some embodiments, a physical storage unit optimization action instruction includes one or more items of data that are representative and/or indicative of instructions for adjusting the operations of the plant 102 based on physical storage unit depletion data. For example, a physical storage unit optimization action instruction may include one or more items of data that are representative and/or indicative of instructions for adjusting the operations of one or more of the plurality of physical storage units 302, the plurality of physical processing units 304, and/or the plurality of physical streams 306.

Example Methods

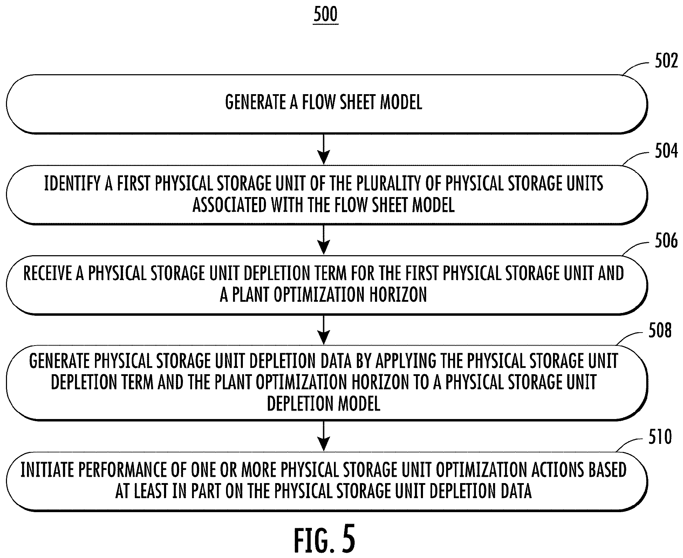

Referring now to FIG. 5, a flowchart providing an example method 500 is illustrated. In this regard, FIG. 5 illustrates operations that may be performed by the physical storage unit optimization system 140, the user device 160, the plant 102, and/or the like. In some embodiments, the method 500 includes operations for generating physical storage unit depletion data. In some embodiments, the example method 500 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 500.

As shown in block 502, the method 500 includes generating a flow sheet model. As described above, in some embodiments, the physical storage unit optimization system is configured generate the flow sheet model using operational data. In some embodiments, operational data includes one or more items of data representative and/or indicative of operations of the plant. For example, operational data may be representative of any number of physical processing units, physical storage units, and/or physical streams included in the plant (e.g., which physical processing units, physical storage units, and/or physical streams are included in the plant). As another example, operational data may be representative of one or more statuses associated with the plant (e.g., what type of processed product the plant is generating). In this regard, in some embodiments, the physical storage unit optimization system is configured to receive operational data from the plant and use the operational data to generate the flow sheet model. Additionally, or alternatively, the physical storage unit optimization system is configured to receive the flow sheet model. For example, the physical storage unit optimization system may be configured to receive the flow sheet model from the plant and/or one or more external computing devices (e.g., the plant and/or one or more external computing devices are configured to generate the flow sheet model).

In some embodiments, the flow sheet model is representative of a layout of the plant. In this regard, in some embodiments, the flow sheet model is representative of a plurality of physical storage units of the plant. In some embodiments, each of the plurality of physical storage units is configured to store one or more processing materials. In some embodiments, the one or more processing materials include one or more input ingredients. For example, the one or more input ingredients may include raw materials and/or ingredients upon which the plant has not performed any processing (e.g., crude oil). In some embodiments, the one or more processing materials include one or more intermediate ingredients. For example, the one or more intermediate ingredients may include partially processed materials and/or partially processed ingredients upon which the plant has performed some processing but has not completed processing. In some embodiments, the one or more processing materials include one or more processed products. For example, the one or more processed products may include processed materials and/or processed products upon which the plant has completed processing (e.g., aviation fuel).

In some embodiments, the plurality of physical storage units includes any number of the types of physical storage units described above. For example, the plurality of physical storage units may include one or more input physical storage units. In some embodiments, the one or more input physical storage units are configured to store processing materials that include one or more input ingredients. As another example, the plurality of physical storage units may include one or more intermediate physical storage units. In some embodiments, the one or more intermediate physical storage units are configured to store processing materials that include one or more intermediate ingredients. As another example, the plurality of physical storage units may include one or more component physical storage units. In some embodiments, the one or more component physical storage units are configured to store processing materials that include one or more intermediate ingredients. As another example, the plurality of physical storage units may include one or more processed product physical storage units. In some embodiments, the one or more processed product physical storage units are configured to store processing materials that include one or more processed products.

In some embodiments, the flow sheet model is representative of a plurality of physical processing units of the plant. In some embodiments, the plurality of physical processing units include any number of the types of physical processing units described above. For example, the plurality of physical storage units may include a catalytic cracking processing unit. In some embodiments, the flow sheet model is representative of a plurality of physical streams of the plant. In some embodiments, the plurality of physical streams include any number of the types of physical streams described above. For example, the plurality of physical streams may include a naphtha physical stream. Additionally, or alternatively, the flow sheet model is representative of one or more relationships and/or connections between the plurality of physical storage units, the plurality of physical processing units, and/or the plurality of physical streams. For example, the flow sheet model may indicate that one or more of the plurality of physical storage units are connected to one or more of the plurality of physical processing units via one or more of the plurality of physical streams.

As shown in block 504, the method 500 includes identifying a first physical storage unit of the plurality of physical storage units associated with the flow sheet model. As described above, in some embodiments, the physical storage unit optimization system may be configured to identify a first physical storage unit from the one or more intermediate physical storage units. As another example, the physical storage unit optimization system is configured to identify a first physical storage unit from the one or more component physical storage units. In some embodiments, the physical storage unit optimization system is configured to generate physical storage unit depletion data associated with a first physical storage unit of the plurality of physical storage units. Said differently, for example, a first physical storage unit may be identified such that physical storage unit depletion data can be generated for the first physical storage unit.

In some embodiments, identifying a first physical storage unit of the plurality of physical storage units includes the physical storage unit optimization system being configured to receive an indication of the first physical storage unit. For example, the physical storage unit optimization system may be configured to receive an indication of the first physical storage unit from an operator of the plant and/or a user of the physical storage unit optimization system.

In some embodiments, identifying a first physical storage unit of the plurality of physical storage units includes the physical storage unit optimization system being configured to receive an indication of a particular processed product that an operator of the plant and/or a user of the physical storage unit optimization system is planning to make over a particular time period. In this regard, in some embodiments, the physical storage unit optimization system is configured to identify a first physical storage unit for which physical storage unit depletion data should be generated in order to ensure that an operator of the plant and/or a user of the physical storage unit optimization system is able to make the particular processed product over the particular time period. For example, the first physical storage unit may be configured to store an intermediate ingredient that is used to generate the particular processed product.

In some embodiments, identifying a first physical storage unit of the plurality of physical storage units includes the physical storage unit optimization system being configured to receive an indication of a particular intermediate ingredient that an operator of the plant and/or a user of the physical storage unit optimization system wants to preserve. In this regard, in some embodiments, the physical storage unit optimization system is configured to identify a first physical storage unit for which physical storage unit depletion data should be generated in order to ensure that the particular intermediate ingredient that an operator of the plant and/or a user of the physical storage unit optimization system wants to preserve is preserved. For example, the first physical storage unit may be configured to store the particular intermediate ingredient that is to be preserved.

As shown in block 506, the method 500 includes receiving a physical storage unit depletion term for the first physical storage unit and a plant optimization horizon. As described above, in some embodiments, the physical storage unit optimization system is configured to receive a physical storage unit depletion term from an operator of the plant (e.g., a computing device associated with an operator the plant). In some embodiments, the physical storage unit optimization system is configured to receive a physical storage unit depletion term from a user of the physical storage unit optimization system. In this regard, in some embodiments, an operator of the plant and/or a user of the physical storage unit optimization system may be able to define a physical storage unit depletion term for the plant and/or one or more other plants associated with the operator or user (e.g., an operator may be able to define different physical storage unit depletion terms for different plants based on the operations of each of the plants). For example, an operator of the plant and/or a user of the physical storage optimization system may be able to define a physical storage unit depletion term that is equal to an optimization horizon and/or a percentage of an optimization horizon.

In some embodiments, the physical storage unit optimization system is configured to request a physical storage unit depletion term from an operator of the plant and/or a user of the physical storage unit optimization system. For example, the physical storage unit optimization system may be configured to request a physical storage unit depletion term from an operator of the plant and/or a user of the physical storage unit optimization system in response to identifying a first physical storage unit of the plurality of physical storage units.

In some embodiments, the physical storage unit optimization system is configured to generate a physical storage unit depletion term. In some embodiments, the physical storage unit optimization system is configured to generate a physical storage unit depletion term using operational data. In this regard, for example, the physical storage unit optimization system may be configured to generate a physical storage unit depletion term using operational data representative of a type of processed product the plant is currently generating and/or planning to generate in the near term. As another example, the physical storage unit optimization system may be configured to generate a physical storage unit depletion term using operational data representative of the types of physical processing units, physical storage units, and/or physical streams in the plant. In some embodiments, the physical storage unit optimization system is configured to generate a physical storage unit depletion term when the physical storage unit optimization system does not receive a physical storage unit depletion term from an operator of the plant and/or a user of the physical storage unit optimization system. For example, the physical storage unit optimization system may be configured to generate a physical storage unit depletion term that is equal to an optimization horizon and/or a percentage of an optimization horizon.

In some embodiments, a physical storage unit depletion term is a data object that is representative and/or indicative of a time period, time window, and/or the like for which processing materials stored in one of the plurality of physical storage units should last. In this regard, for example, a physical storage unit depletion term may be a data object that is representative and/or indicative of a time period, time window, and/or the like for which intermediate ingredients stored in one of the one or more intermediate physical storage units should last (e.g., 3 months). As another example, a physical storage unit depletion term may be a data object that is representative and/or indicative of a time period, time window, and/or the like for which intermediate ingredients stored in one of the one or more component physical storage units should last (e.g., 2 months).

In some embodiments, the physical storage unit optimization system is configured to receive a plant optimization horizon. In some embodiments, the physical storage unit optimization system is configured to receive a plant optimization horizon from an operator of the plant (e.g., a computing device associated with an operator the plant). In some embodiments, the physical storage unit optimization system is configured to receive a plant optimization horizon from a user of the physical storage unit optimization system. In some embodiments, the physical storage unit optimization system is configured to request a plant optimization horizon from an operator of the plant and/or a user of the physical storage unit optimization system. For example, the physical storage unit optimization system may be configured to request a plant optimization horizon from an operator of the plant and/or a user of the physical storage unit optimization system in response to identifying a first physical storage unit of the plurality of physical storage units and/or receiving a physical storage unit depletion term.

In some embodiments, the physical storage unit optimization system is configured to generate a plant optimization horizon. In some embodiments, the physical storage unit optimization system is configured to generate a plant optimization horizon using operational data. In this regard, for example, the physical storage unit optimization system may be configured to generate a plant optimization horizon using operational data representative of a type of processed product the plant is currently generating and/or planning to generate in the near term. As another example, the physical storage unit optimization system may be configured to generate a plant optimization horizon using operational data representative of the types of physical processing units, physical storage units, and/or physical streams in the plant.

In some embodiments, a plant optimization horizon is a data object that is representative and/or indicative of a frequency at which the physical storage unit optimization system implements one or more optimization operations for the plant. For example, a plant optimization horizon may be a data object that is representative and/or indicative of a twelve-to-sixteen-hour frequency at which the physical storage unit optimization system implements one or more optimization operations. In some embodiments, an optimization operation is an operation performed by the physical storage unit optimization system to optimize the operations of the plant based on data associated with the plant (e.g., operational data). For example, an optimization operation may include the physical storage unit optimization system being configured to address deviations in the amount of processed products generated by the plant due do disturbances and/or maintenance associated with one or more of the plurality of physical storage units, the plurality of physical processing units, and/or the plurality of physical streams of the plant. Said differently, for example, an optimization horizon may be a data object that is representative and/or indicative of a frequency at which the physical storage unit optimization system optimizes operations of the plant based on the current and/or near-term conditions of the plant. In some embodiments, an optimization horizon may be associated with a frequency that is less than the physical storage unit depletion term. For example, there may be multiple optimization horizons in a single physical storage unit depletion term. In some embodiments, an optimization horizon is determined and/or set to prevent rocking of one or more of the plurality of physical storage units, the plurality of physical processing units, and/or the plurality of physical streams of the plant.

As shown in block 508, the method 500 includes generating physical storage unit depletion data by applying the physical storage unit depletion term and the plant optimization horizon to a physical storage unit depletion model. As described above, in some embodiments, physical storage unit depletion data includes one or more items of data representative and/or indicative of a portion of the processing material stored in a physical storage unit (e.g., a first physical storage unit) of the plurality of physical storage units to hold in reserve. For example, physical storage unit depletion data may include one or more items of data representative and/or indicative of a portion of the input ingredients stored in an input physical storage unit of the one or more input physical storage units to hold in reserve. As another example, physical storage unit depletion data may include one or more items of data representative and/or indicative of a portion of the intermediate ingredients stored in an intermediate physical storage unit of the one or more intermediate physical storage units to hold in reserve. As another example, physical storage unit depletion data may include one or more items of data representative and/or indicative of a portion of the intermediate ingredients stored in a component physical storage unit of the one or more component physical storage units to hold in reserve. As another example, physical storage unit depletion data may include one or more items of data representative and/or indicative of a portion of the processed products stored in a processed product physical storage unit of the one or more processed product physical storage units to hold in reserve. Said differently, for example, physical storage unit depletion data may be representative of a reserve portion of the total processing material stored in a particular physical storage unit (e.g., a first physical storage unit) of the plurality of physical storage units.

In some embodiments, the physical storage unit optimization system is configured to generate physical storage unit depletion data by applying a physical storage unit depletion term and/or a plant optimization horizon to a physical storage unit depletion model. In some embodiments, the physical storage unit depletion model is a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to generate physical storage unit depletion data. In this regard, in some embodiments, the physical storage unit depletion model may be configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, clustering techniques, and/or the like. For example, the physical storage unit depletion model may be configured to generate physical storage unit depletion data using any of the above techniques and/or equation (1):

$$(1) \quad P = e^{-\frac{(2 * optimization\ horizon)}{\left(\frac{PT}{3}\right)}}$$

where P corresponds to physical storage unit depletion data that, for example, represents a physical storage unit depletion factor (e.g., a portion of the processing material stored in a physical storage unit) and PT corresponds to a physical storage unit depletion term that, for example, represents a depletion window (e.g., a time period, time window, and/or the like for which processing materials stored in one of the plurality of physical storage units should last).

In some embodiments, the physical storage unit optimization system is configured to update previously generated physical storage unit depletion data. For example, the physical storage unit optimization system may be configured to update previously generated physical storage unit depletion data in response to receiving an updated physical storage unit depletion term. As another example, the physical storage unit optimization system may be configured to update previously generated physical storage unit depletion data in response to receiving an updated optimization horizon. As another example, the physical storage unit optimization system may be configured to update previously generated physical storage unit depletion data in response to a physical storage unit depletion term ending or expiring. As another example, the physical storage unit optimization system may be configured to update previously generated physical storage unit depletion data in response to an optimization horizon ending or expiring.

As shown in block 510, the method 500 includes initiating performance of one or more physical storage unit optimization actions based at least in part on the physical storage unit depletion data. For example, the physical storage unit optimization system may be configured to initiate performance of one or more physical storage unit optimization actions in response to generating physical storage unit depletion data.

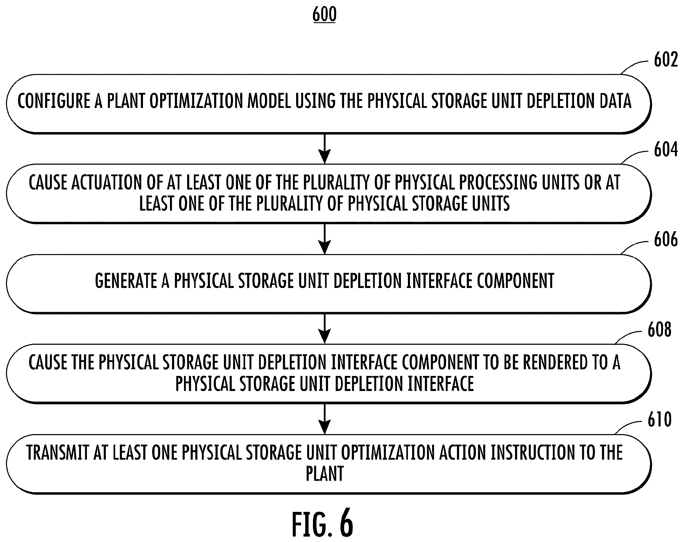

Referring now to FIG. 6, a flowchart providing an example method 600 is illustrated. In this regard, FIG. 6 illustrates operations that may be performed by the physical storage unit optimization system 140, the user device 160, the plant 102, and/or the like. In some embodiments, the method 600 includes operations for initiating performance of one or more physical storage unit optimization actions. In some embodiments, the example method 600 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 600.

As shown in block 602, the method 600 includes configuring a plant optimization model using the physical storage unit depletion data. As described above, in some embodiments, the plant optimization model is configured to perform one or processing material balancing operations (e.g., a mass balancing operation) associated with the plant. In this regard, in some embodiments, the plant optimization model is a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to perform one or more processing material balancing operations. In this regard, in some embodiments, the plant optimization model may be configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, clustering techniques, and/or the like. For example, the plant optimization model may be configured to perform one or more processing material balancing operations using equation (2):

$$(2) \quad R \cdot p_{m1}^{after} \leq c_{m1} := \int_{0}^{OH} G_F u dt + V_0 + V_s^{after}$$

where $V_0$ is representative of a total amount of processing material in a physical storage unit, such as a first physical storage unit (e.g., corresponding to the total amount illustrated in the visual representation).

In some embodiments, the physical storage unit optimization system is configured to configure the plant optimization model to account for physical storage unit depletion data generated by the physical storage unit optimization system. In this regard, in some embodiments, the physical storage unit optimization system may be configured to configure the plant optimization model by altering equation (2) to become equation (3):

$$(3) \quad R \cdot p_{m1}^{after} \leq c_{m1} := \int_{0}^{OH} G_F u dt + (1 - P)V_0 + V_s^{after}$$

where P is representative of physical storage unit depletion data (e.g., physical storage unit depletion factor, as described above).

As another example, the plant optimization model may be configured to perform one or more processing material balancing operations using equation (4):

$$(4) \quad R \cdot |p_{m1} - Sum(V_s)^T| \leq c_{m2} := \int_{0}^{OH} G_F u dt + V_0$$

where $V_0$ is representative of a total amount of processing material in a physical storage unit, such as a first physical storage unit (e.g., corresponding to the total amount illustrated in the visual representation).

In some embodiments, the physical storage unit optimization system is configured to configure the plant optimization model to account for physical storage unit depletion data generated by the physical storage unit optimization system. In this regard, in some embodiments, the physical storage unit optimization system may be configured to configure the plant optimization model by altering equation (4) to become equation (5):

$$(5) \quad R \cdot |p_{m1} - Sum(V_s)^T| \leq c_{m2} := \int_{0}^{OH} G_F u dt + (1 - P)V_0$$

where P is representative of physical storage unit depletion data (e.g., physical storage unit depletion factor).

As another example, the plant optimization model may be configured to perform one or more processing material balancing operations using equation (6):

$$(6) \quad p_{m2} \leq c_{m2} := \int_{0}^{OH} G_F u dt + V_0$$

where $V_0$ is representative of a total amount of processing material in a physical storage unit, such as a first physical storage unit (e.g., corresponding to the total amount illustrated in the visual representation).

In some embodiments, the physical storage unit optimization system is configured to configure the plant optimization model to account for physical storage unit depletion data generated by the physical storage unit optimization system. In this regard, in some embodiments, the physical storage unit optimization system may be configured to configure the plant optimization model by altering equation (6) to become equation (7):

$$(7) \quad p_{m2} \leq c_{m2} := \int_{0}^{OH} G_F u dt + (1 - P)V_0$$

where P is representative of physical storage unit depletion data (e.g., physical storage unit depletion factor).

As shown in block 604, the method 600 includes causing actuation of at least one of the plurality of physical processing units or at least one of the plurality of physical storage units. As described above, in some embodiments, the physical storage unit optimization system may be configured to cause actuation of at least one of the plurality of physical storage units to ensure that a portion of the processing material stored in a physical storage unit (e.g., a first physical storage unit) is held in reserve in accordance with physical storage unit depletion data generated by the physical storage unit optimization system. As another example, the physical storage unit optimization system may be configured to cause actuation of at least one of the plurality of physical processing units to ensure that a portion of the processing material stored in a physical storage unit (e.g., a first physical storage unit) is held in reserve in accordance with physical storage unit depletion data generated by the physical storage unit optimization system. As another example, the physical storage unit optimization system may be configured to cause actuation of at least one of the plurality of physical streams to ensure that a portion of the processing material stored in a physical storage unit (e.g., a first physical storage unit) is held in reserve in accordance with physical storage unit depletion data generated by the physical storage unit optimization system.

As shown in block 606, the method 600 includes generating a physical storage unit depletion interface component. As described above, in some embodiments, the physical storage unit depletion interface component includes a physical storage unit depletion interface element. In some embodiments, the physical storage unit depletion interface element is configured to display physical storage unit depletion data. In this regard, for example, the physical storage unit depletion interface element may be configured to display information indicative of a portion of the processing material stored in a physical storage unit (e.g., a first physical storage unit) of the plurality of physical storage units to hold in reserve, an optimization horizon used to generate the physical storage unit depletion data, and/or a physical storage unit depletion term used to generated the physical storage unit depletion data.

In some embodiments, the physical storage unit depletion interface component includes a visual representation of a first physical storage unit (e.g., a physical storage unit for which the physical storage unit optimization system has generated physical storage unit depletion data). In some embodiments, the visual representation is configured to display a total amount of processing material stored in the first physical storage unit. In some embodiments, the visual representation is configured to show a portion of the total amount stored in the first physical storage unit (e.g., a portion that is indicated by physical storage unit depletion data).

In some embodiments, the physical storage unit optimization system is configured to dynamically update the visual representation. For example, the physical storage unit optimization system may be configured to dynamically update the visual representation in response to updating previously generated physical storage unit depletion data. In some embodiments, the visual representation may be located in proximity to the physical storage unit depletion interface element on the physical storage unit depletion interface component. Additionally, or alternatively, the physical storage unit depletion interface element may be at least partially overlaid the visual representation the physical storage unit depletion interface component.

As shown in block 608, the method 600 includes causing the physical storage unit depletion interface component to be rendered to a physical storage unit depletion interface. As described above, for example, the physical storage unit depletion interface component may be accessed using the physical storage unit optimization system, a computing device associated with the plant, the user device, and/or one or more other computing devices (e.g., a remote computing device).

As shown in block 610, the method 600 includes transmitting at least one physical storage unit optimization action instruction to the plant. As described above, in some embodiments, the physical storage unit optimization system may be configured to transmit a physical storage unit optimization action instruction to a computing device located at the plant. In some embodiments, a physical storage unit optimization action instruction includes one or more items of data that are representative and/or indicative of instructions for adjusting the operations of the plant based on physical storage unit depletion data. For example, a physical storage unit optimization action instruction may include one or more items of data that are representative and/or indicative of instructions for adjusting the operations of one or more of the plurality of physical storage units, the plurality of physical processing units, and/or the plurality of physical stream.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

**Claims**

1. A method comprising:

   generating a flow sheet model, wherein the flow sheet model is representative of a plurality of physical processing units and a plurality of physical storage units of a plant, wherein each of the plurality of physical storage units is configured to store one or more processing materials;
   identifying a first physical storage unit of the plurality of physical storage units associated with the flow sheet model;
   receiving a physical storage unit depletion term for the first physical storage unit and a plant optimization horizon;
   generating physical storage unit depletion data by applying the physical storage unit depletion term and the plant optimization horizon to a physical storage unit depletion model; and
   initiating performance of one or more physical storage unit optimization actions based at least in part on the physical storage unit depletion data.

2. The method of claim 1, wherein the flow sheet model is further representative of a plurality of physical streams of the plant.

3. The method of claim 1, wherein initiating performance of the one or more physical storage unit optimization actions comprises:
   configuring a plant optimization model using the physical storage unit depletion data.

4. The method of claim 3, wherein the plant optimization model is configured to perform a processing material balancing operation.

5. The method of claim 1, wherein the plurality of physical storage units includes an intermediate physical storage unit or a component physical storage unit.

6. The method of claim 1, wherein the physical storage unit depletion term and the plant optimization horizon are received from the plant.

7. The method of claim 1, wherein initiating performance of the one or more physical storage unit optimization actions comprises:
   causing actuation of at least one of the plurality of physical processing units or at least one of the plurality of physical storage units.

8. The method of claim 1, wherein initiating performance of the one or more physical storage unit optimization actions:

generating a physical storage unit depletion interface component; and

causing the physical storage unit depletion interface component to be rendered to a physical storage unit depletion interface.

9. The method of claim 8, wherein the physical storage unit depletion interface component comprises a visual representation of the first physical storage unit.

10. The method of claim 1, wherein initiating performance of the one or more physical storage unit optimization actions comprises:

transmitting at least one physical storage unit optimization action instruction to the plant.

11. The method of claim 1, wherein the flow sheet model is generated using operational data associated with the plant.

12. An apparatus comprising memory and one or more processors communicatively coupled to the memory, the one or more processors configured to:

generate a flow sheet model, wherein the flow sheet model is representative of a plurality of physical processing units and a plurality of physical storage units of a plant, wherein each of the plurality of physical storage units is configured to store one or more processing materials;

identify a first physical storage unit of the plurality of physical storage units associated with the flow sheet model;

receive a physical storage unit depletion term for the first physical storage unit and a plant optimization horizon;

generate physical storage unit depletion data by applying the physical storage unit depletion term and the plant optimization horizon to a physical storage unit depletion model; and

initiate performance of one or more physical storage unit optimization actions based at least in part on the physical storage unit depletion data.

13. The apparatus of claim 12, wherein the flow sheet model is further representative of a plurality of physical streams of the plant.

14. The apparatus of claim 12, wherein to initiate performance of the one or more physical storage unit optimization actions comprises the one or more processors being further configured to:

configure a plant optimization model using the physical storage unit depletion data.

15. A computer program product comprising at least one non-transitory computer-readable storage medium having computer program code stored thereon that, in execution with at least one processor, configures the computer program product for:

generating a flow sheet model, wherein the flow sheet model is representative of a plurality of physical processing units and a plurality of physical storage units of a plant, wherein each of the plurality of physical storage units is configured to store one or more processing materials;

identifying a first physical storage unit of the plurality of physical storage units associated with the flow sheet model;

receiving a physical storage unit depletion term for the first physical storage unit and a plant optimization horizon;

generating physical storage unit depletion data by applying the physical storage unit depletion term and the plant optimization horizon to a physical storage unit depletion model; and

initiating performance of one or more physical storage unit optimization actions based at least in part on the physical storage unit depletion data.

<u>100</u>

<u>130</u>

160

<u>102</u>

<u>140</u>

<u>150</u>

# FIG. 1

FIG. 2

FIG. 3

FIG. 4

<u>500</u>

502

GENERATE A FLOW SHEET MODEL

504

IDENTIFY A FIRST PHYSICAL STORAGE UNIT OF THE PLURALITY OF PHYSICAL STORAGE UNITS ASSOCIATED WITH THE FLOW SHEET MODEL

506

RECEIVE A PHYSICAL STORAGE UNIT DEPLETION TERM FOR THE FIRST PHYSICAL STORAGE UNIT AND A PLANT OPTIMIZATION HORIZON

508

GENERATE PHYSICAL STORAGE UNIT DEPLETION DATA BY APPLYING THE PHYSICAL STORAGE UNIT DEPLETION TERM AND THE PLANT OPTIMIZATION HORIZON TO A PHYSICAL STORAGE UNIT DEPLETION MODEL

510

INITIATE PERFORMANCE OF ONE OR MORE PHYSICAL STORAGE UNIT OPTIMIZATION ACTIONS BASED AT LEAST IN PART ON THE PHYSICAL STORAGE UNIT DEPLETION DATA

FIG. 5

<u>600</u>

```
                                                                    602
┌─────────────────────────────────────────────────────────────────────┐
│ CONFIGURE A PLANT OPTIMIZATION MODEL USING THE PHYSICAL STORAGE UNIT DEPLETION DATA │
└─────────────────────────────────────────────────────────────────────┘
                              │
                              ▼                                     604
┌─────────────────────────────────────────────────────────────────────┐
│ CAUSE ACTUATION OF AT LEAST ONE OF THE PLURALITY OF PHYSICAL PROCESSING UNITS OR AT │
│            LEAST ONE OF THE PLURALITY OF PHYSICAL STORAGE UNITS         │
└─────────────────────────────────────────────────────────────────────┘
                              │
                              ▼                                     606
┌─────────────────────────────────────────────────────────────────────┐
│       GENERATE A PHYSICAL STORAGE UNIT DEPLETION INTERFACE COMPONENT    │
└─────────────────────────────────────────────────────────────────────┘
                              │
                              ▼                                     608
┌─────────────────────────────────────────────────────────────────────┐
│ CAUSE THE PHYSICAL STORAGE UNIT DEPLETION INTERFACE COMPONENT TO BE RENDERED TO A │
│              PHYSICAL STORAGE UNIT DEPLETION INTERFACE                 │
└─────────────────────────────────────────────────────────────────────┘
                              │
                              ▼                                     610
┌─────────────────────────────────────────────────────────────────────┐
│ TRANSMIT AT LEAST ONE PHYSICAL STORAGE UNIT OPTIMIZATION ACTION INSTRUCTION TO THE │
│                                PLANT                                   │
└─────────────────────────────────────────────────────────────────────┘
```

FIG. 6

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/379112 A1 (KOCIS GARY R [US] ET AL) 25 December 2014 (2014-12-25)<br>* claim 1 *<br>* figures 4,10,12,16 *<br>* paragraph [0047] - paragraph [0055] *<br>* paragraph [0071] - paragraph [0075] *<br>* paragraph [0086] - paragraph [0091] *<br>* paragraph [0100] - paragraph [0102] *<br>* paragraph [0131] - paragraph [0135] *<br>* paragraph [0142] *<br>----- | 1-15 | INV.<br>G06Q10/04<br>G06Q10/06<br>G06Q10/08<br>G06Q50/04<br>G05B19/418 |
| A | US 2024/036555 A1 (LU JOSEPH Z [US] ET AL) 1 February 2024 (2024-02-01)<br>* paragraph [0041] - paragraph [0044] *<br>* paragraph [0084] - paragraph [0091] *<br>* paragraph [0108] - paragraph [0117] *<br>----- | 1-15 | |
| A | US 2011/040399 A1 (LU JOSEPH Z [US]) 17 February 2011 (2011-02-17)<br>* paragraph [0015] *<br>* page 34 *<br>* paragraph [0087] - paragraph [0097] *<br>----- | 1-15 | TECHNICAL FIELDS SEARCHED (IPC)<br><br>G06Q<br>G05B |

The present search report has been drawn up for all claims

| Place of search | Date of completion of the search | Examiner |
|---|---|---|
| Munich | 30 January 2026 | Shivaldova, Veronika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 7038

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2026

| Patent document cited in search report | Publication date | Patent family member(s) | | Publication date |
|---|---|---|---|---|
| US 2014379112 A1 | 25-12-2014 | CA | 2813693 A1 | 12-04-2012 |
| | | CN | 103229114 A | 31-07-2013 |
| | | EP | 2625574 A1 | 14-08-2013 |
| | | SG | 189198 A1 | 31-05-2013 |
| | | US | 2012083914 A1 | 05-04-2012 |
| | | US | 2014379112 A1 | 25-12-2014 |
| | | WO | 2012047782 A1 | 12-04-2012 |
| US 2024036555 A1 | 01-02-2024 | AU | 2023204414 A1 | 15-02-2024 |
| | | CA | 3207005 A1 | 30-01-2024 |
| | | EP | 4312089 A1 | 31-01-2024 |
| | | US | 2024036555 A1 | 01-02-2024 |
| US 2011040399 A1 | 17-02-2011 | CN | 102549512 A | 04-07-2012 |
| | | EP | 2465015 A2 | 20-06-2012 |
| | | JP | 2013502003 A | 17-01-2013 |
| | | US | 2011040399 A1 | 17-02-2011 |
| | | WO | 2011019537 A2 | 17-02-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9733629 B

- US 20210132591